**Europäisches Patentamt**

**European Patent Office**

**Office européen des brevets**

(19)

(11) Veröffentlichungsnummer : **0 617 815 B1**

(12) # EUROPÄISCHE PATENTSCHRIFT

(45) Veröffentlichungstag der Patentschrift :
25.10.95 Patentblatt 95/43

(51) Int. Cl.⁶ : **G06T 7/60,** G06K 9/00

(21) Anmeldenummer : **93900103.8**

(22) Anmeldetag : **17.12.92**

(86) Internationale Anmeldenummer :
**PCT/EP92/02935**

(87) Internationale Veröffentlichungsnummer :
**WO 93/12503 24.06.93 Gazette 93/15**

(54) **VERFAHREN UND VORRICHTUNG ZUM AUTOMATISCHEN ERKENNEN VON OBJEKTEN.**

(30) Priorität : **18.12.91 DE 4141880**

(43) Veröffentlichungstag der Anmeldung :
**05.10.94 Patentblatt 94/40**

(45) Bekanntmachung des Hinweises auf die
Patenterteilung :
**25.10.95 Patentblatt 95/43**

(84) Benannte Vertragsstaaten :
**AT CH ES FR GB IE IT LI NL SE**

(56) Entgegenhaltungen :
**EP-A- 0 492 633**
**US-A- 4 764 681**

(73) Patentinhaber : **HÖFER, Hendrik**
**Sternstr.21**
**D-80538 München (DE)**
Patentinhaber : **KAMUTZKI, Hans**
**Steiermarkstr. 24**
**D-81241 München (DE)**

(72) Erfinder : **HÖFER, Hendrik**
**Sternstr.21**
**D-80538 München (DE)**
Erfinder : **KAMUTZKI, Hans**
**Steiermarkstr. 24**
**D-81241 München (DE)**

(74) Vertreter : **Schulz, Rütger, Dr. et al**
**Patentanwälte Mitscherlich & Partner,**
**Sonnenstrasse 33**
**D-80331 München (DE)**

**Beschreibung**

Die Erfindung betrifft ein Verfahren zur automatischen Erkennung von Objekten, wie es im Oberbegriff des Patentanspruches 1 näher angegeben ist, sowie eine Vorrichtung zur Durchführung dieses Verfahrens.

Aus der US-Patentschrift 4 764 681 sind ein Verfahren und eine Vorrichtung zur elektrooptischen Untersuchung von Objekten bekannt, wobei die Objekte mit einer Lichtquelle beleuchtet und zeilenweise abgetastet werden. Durch Änderungen in der detektierten Lichtintensität können Materialfehler erkannt werden.

Mit dem Verfahren bzw. der Vorrichtung nach der obigen Patentschrift ist jedoch ein automatisches Erkennen von Objekten mit einer unregelmäßigen und/oder unzusammenhängenden Form nicht möglich.

In der Technik sind Verfahren zur automatischen Erkennung von Objekten bekannt, bei denen von dem zu untersuchenden Objekt mit Hilfe einer Videokamera ein Bild aufgenommen wird und die gelieferten Bilddaten mit Bilddaten vorbekannter oder genormter Objekte verglichen werden, die in Bildspeichern abgelegt sind. Für den Vergleich der aufgenommenen mit den in den Speichern abgelegten Bilddaten wird ggfs. noch eine Transformation durchgeführt, mit deren Hilfe das aufgenommene Bild gedreht oder in seitlicher Richtung verschoben wird, so daß eine größtmögliche Deckung mit einem der in den Speichern abgelegten Bildmuster erzielt wird.

Da bei den bekannten Verfahren die Objekterkennung auf einem Bildvergleich beruht, sind sie nur zur Erkennung von Objekten geeignet, die einem vorbekannten Bild entsprechen. Sie lassen sich daher nicht zur Erkennung von Objekten einsetzen, die unregelmäßig und/oder unzusammenhängend geformt sind, wie das zum Beispiel bei biologischen Objekten der Fall ist.

Im medizinisch-biologischen Bereich beruhen verschiedene Diagnoseverfahren darauf, daß in Zellkulturen Cluster von Zellen gezählt werden, die beispielsweise aufgrund einer immun-biilogischen Reaktion in bestimmter Weise eingefärbt sind. Die Zellcluster bestehen aus einzelnen Zellen, die entweder unmittelbar zusammenhängend nebeneinander liegen oder aber nicht weiter als um einen definierten Abstand voneinander entfernt sind und eine bestimmte Größe (Flächenausdehnung) überschreiten. Die Häufigkeit solcher Zellcluster kann mit den herkömmlichen Bilderkennungsmethoden nicht bestimmt werden, da die Zellcluster völlig unregelmäßig geformt und teilweise auch unzusammenhängend sind.

Dementsprechend ist es Aufgabe der Erfindung, mit videooptischen Mitteln beliebig geformte Objekte erkennen und nach Größe klassifizieren zu können, die nicht unbedingt zusammenhängend sein müssen, und die aus Elementen eines gewissen Farbbereichs oder Grauwertbereichs zusammengesetzt sind und innerhalb ihrer Ausdehnung auch Leerstellen, d.h. kleine Bereiche anderer Farbspezifizierung haben können. Dabei sollen solche Objekte als unzusammenhängend und damit als verschieden erkannt werden konnen, wenn ihr geometrischer Abstand einen bestimmten Betrag überschreitet.

Diese Aufgabe wird durch ein Verfahren bzw. eine Vorrichtung nach dem Oberbegriff des Patentanspruches 1 bzw. 7 gelöst, die gemäß der Erfindung nach der im Kennzeichenteil des Patentanspruches angegebenen Weise ausgestaltet sind. Weitere Ausgestaltungen der Erfindung sind in den Unteransprüchen angegeben.

Im folgenden werden die Grundgedanken der Erfindung und einzelne Ausführungsbeispiele anhand der Figuren näher erläutert.

| | |
|---|---|
| Figur 1 | zeigt die Zerlegung eines Farbbildes in drei monochromatische Rasterebenen mit numerischer Repräsentation der jeweiligen Intensitäten |
| Figur 2 | veranschaulicht, ab welcher Größe Objekte erkannt werden können |
| Figur 3 | zeigt eine erste Schaltung zur Selektierung eines bestimmten Farbbereiches |
| Figur 4 | zeigt eine Schaltung für die simultane Auswahl von zwei Farbbereichen |
| Figur 5 | veranschaulicht das Prinzip der Erstellung des reduzierten Bildes |
| Figur 6 | zeigt ein Ausführungsbeispiel einer erfindungsgemäßen Schaltung für die Erstellung des reduzierten Bildes |
| Figur 7a | zeigt den Datenflußplan für einen ersten Teil des erfindungsgemäßen Verfahrens |
| Figur 7b | zeigt das Nassi-Schneidermann-Struktogramm für den Datenflußplan nach Fig. 7a |
| Figur 8a | zeigt den Datenflußplan für einen zweiten Teil des erfindungsgemäßen Verfahrens |
| Figur 8b | zeigt das Nassi-Schneidermann-Struktogramm für den Datenflußplan nach Fig. 8a |
| Figuren 9 bis 18 | veranschaulichen das Verfahren zur Auswertung des reduzierten Bildes |
| Figur 19 | zeigt schematisch ein System zum Zählen von Zellclustern, bei dem das erfindungsgemäße Verfahren eingesetzt wird |

Der Erfindung liegen folgende Überlegungen zugrunde:

Die Grundlage für die Erkennung und Zählung der Objekte ist die Darstellung der zu untersuchenden Probe in einer technisch verwertbaren Form. Dies geschieht mit einer Videokamera. Im folgenden werden die Prinzipien für ein mit einer Farb-Videokamera ausgestattetes System erläutert. Das erfindungsgemäße Verfahren

2

ist jedoch in gleicher Weise in einem System ausführbar, bei dem eine Schwarz-Weiß-Kamera verwendet wird. Anstelle des Farbtones, nach dem gesucht und die Bildauswertung vollzogen wird, tritt dann der Grauwert der betreffenden Bildelemente.

Die hier zunächst betrachtete Farb-Kamera wandelt die durch eine Optik abgebildete Information in mehrere kontinuierliche Analogsignale um. Für das Verfahren eignet sich am besten die Darstellung in Form von drei Bildsignalkomponenten, die amplitudenmoduliert den Farbintensitäten Rot, Grün, Blau ( RGB ) entsprechen. Zusätzlich liefert die Kamera ein Synchronsignal, das die zeitliche Zuordung der Signale zu geometrischen Positionen auf der Probe ermöglicht. Üblich ist hier ein "Zeilenwechselsignal" (Horizontal-Synchronisation) und ein "Bildwechselsignal" (Vertikal-Synchronisation). In der Regel werden 25 Voll-Bilder pro Sekunde geliefert.

Zur Identifizierung der gesuchten Objekte müssen auf diesen Analogsignalen Sequenzen gefunden werden, die den Objekten auf der Probe entsprechen, die in einem (oder mehreren) spezifizierten Farbbereich(en) vorliegen, und den oben geschilderten Anforderungen an Formunabhängigkeit genügen. Hierzu wird nach dem erfindungsgemäßen Verfahren das Bild zunächst in der nachfolgend beschriebenen Weise rasterisiert.

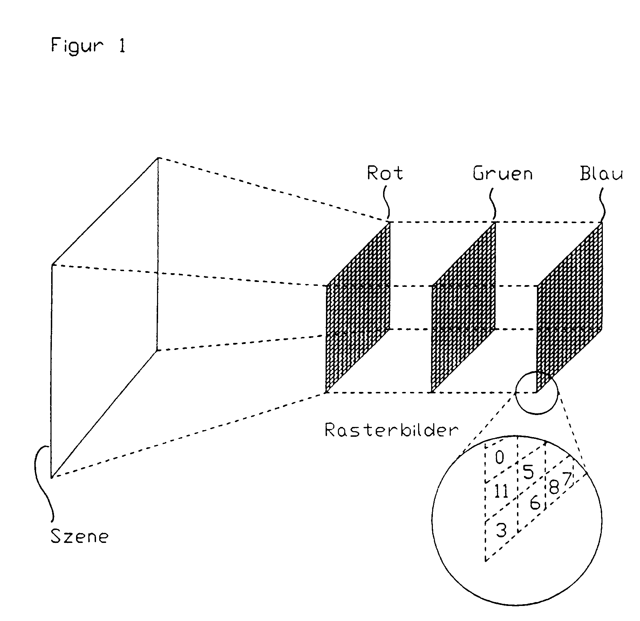

Ein einzelnes Voll-Bild kann abstrakt als Überlagerung dreier rechteckiger Matrizen verstanden werden, bei denen die Matrixelemente numerische Werte einnehmen, die den Farbintensitäten der drei Bildsignale entsprechen (Figur 1). Diese Vorstellung korrespondiert mit der technischen Realisierung von 3-Chip CCD-Kameras, bei denen das optische Signal durch ein Prisma in drei jeweils spektral disjunkte Strahlenbündel zerlegt wird. Auf den CCD-Chips ("Charged Coupled Devices") werden die Strahlenbündel dann "rasterisiert", da die Sensoren eines Chips in rechteckiger Matrixform vorliegen. Die Matrixelemente können nacheinander ausgelesen werden, und die Ladungsmengen entsprechen der gemessenen Intensität des jeweiligen optischen Farbsignals. In der Figur 1 ist in dem Ausschnittrahmen des Blau-Bildes schematisch dargestellt, daß den einzelnen Bildpunkten unterschiedliche Intensitätswerte zugeordnet sind.

Das Auslesen des Bildes findet standardmäßig 25 mal pro Sekunde statt und resultiert dann in den drei schon erwähnten Analogsignalen.

Für das Verfahren relevant ist die zunächst abstrakte Darstellung der Bildinformation in Form von rechteckigen Matrizen, in denen Farbintensitäten numerisch enthalten sind. Für die Erkennung und Zählung farbiger Objekte auf solchen Bildern sind zwei Kriterien von Belang:

Erstens die Farberkennung. Jeder Farbton kann als Tripel von numerischen Rot-Grün-Blau-Werten aufgefaßt werden. Wird nach nur einem Farbton gesucht, müssen nur bestimmte Tripel gefunden werden. Wird ein oder werden mehrere bestimmte Farbbereiche gesucht, müssen Matrixelemente gefunden werden, deren Farbwertkombination aus einer Menge von "gültigen" Tripeln stammen. Da zu diesem Zweck jeweils alle drei Rasterbilder untersucht werden müssen, haben sich Methoden etabliert, die diese Suche in bestimmten Fällen vereinfachen. Eine dieser Methoden ist die sogenannte Farbraumtransformation in den HSI-Raum. Dabei werden die numerischen Werte der drei Matrizen einer allgemein bekannten Transformation unterzogen, so daß drei neue Matrizen entstehen, die wiederum numerische Werte enthalten, jedoch andere Information codieren. Statt der Bewertung durch Rot, Grün und Blau werden in den Matrizen dann numerische Äquivalente von Hue (Farbton) Saturation (Farbsättigung) und Intensity (Intensität) gehalten. Das erfindungsgemäße Verfahren ist von der Darstellungsform der Information in den Matrizen unabhängig, bietet jedoch bei einer Ausführungsvariante Vorteile im Zusammenhang mit der zweiten (HSI) Informationsrepräsentation.

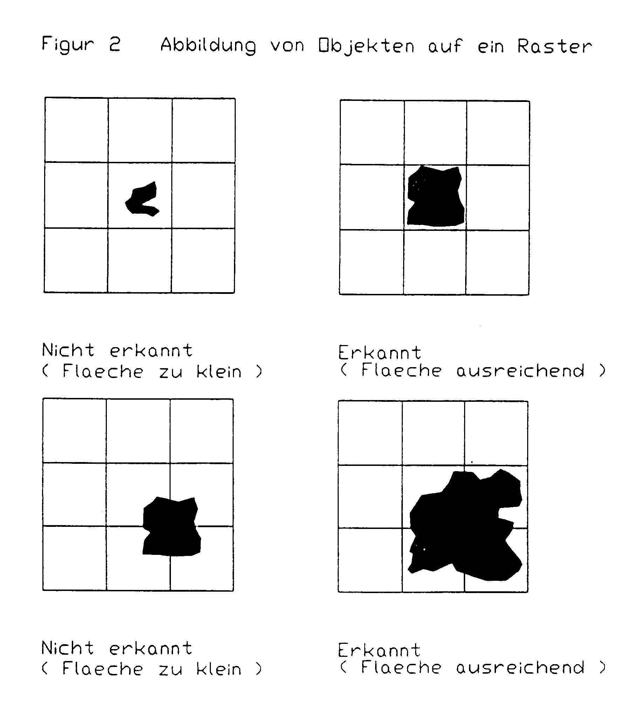

Das zweite Kriterium für die Objekterkennung und Zählung stellt die Auflösung des Rasters dar. Wenn man die Empfindlichkeit der "Rasterisierung" an der Realität einer CCD-Kamera orientiert, muß ein einzelnes Objekt mindestens 50% der Fläche eines Matrixelements überdecken, wenn es überhaupt gefunden werden soll, da bei weniger Bedeckung die Signalintensität nicht ausreicht, um die Farbwerte zu bestimmen. Da das Objekt aber auch auf den Rändern (im schlechtesten Fall auf einem Kreuzungspunkt von vier Rasterelementen) liegen kann, muß es etwa so groß wie 2 Matrixfelder sein, um sicher erkannt zu werden (Figur 2). Wenn zusätzlich eine Information über die Größe des Objekts aus den Matrizen extrahiert werden soll, muß unter Berücksichtigung der zweidimensionalen Quantisierungsfehler ein wesentlich größerer Bereich überdeckt werden. Berechnungen zeigen, daß bei einem akzeptierbaren Flächenbestimmungsfehler von 25% ein Objekt etwa 100 Matrixelemente überdecken muß. Höhere Genauigkeit führt zu noch größeren Überdeckungen. Weiterhin muß, um zwei Objekte als geometrisch disjunkt zu erkennen, ein Mindestabstand von einem Matrixelement zwischen ihnen liegen.

Unter Berücksichtigung der Aufgabenstellung wird deutlich, daß eine effiziente Suche und Klassifikation nur auf hochaufgelösten Bildern möglich ist. Bei den in der Realität für CCD-Kameras typischen Rastergrößen von 512 x 512 Matrixelementen (pro Farbebene) summiert sich die Datenmenge pro Bild auf 786.432 Elemente. Wird pro Matrixelement eine Informationsmenge von 1 Byte (256 mögliche numerische Einstellungen) zugrundegelegt, was für Echtfarbsysteme durchaus üblich ist, so ergibt sich eine Datenmenge von ca. 750 KByte pro Bild. Die für die Untersuchung letztlich relevante Informationsmenge ist jedoch erheblich geringer. Bei dem oben erwähnten Beispiel, mit einem tolerierbaren Flächenfehler von 25%, können sich vereinfacht dargestellt auf einem solchen Bild maximal 2.216 Clusterobjekte befinden, d.h. die gesuchte Informationsmenge ist ca. 3.000 mal kleiner, wenn als clusterspezifizierende Information nur "Cluster existiert" oder "Cluster existiert nicht" erwartet wird. Da die Clusterobjekte in der Realität nicht gleichverteilt auf dem Bild liegen und zudem nicht immer den minimal möglichen Abstand haben, ist die extrahierte Informationsmenge noch viel geringer. Bei einer realisierten Ausführungsvariante der Erfindung, für die die im Beispiel gewählten Rahmenbedingungen zutreffen, (z.B. Erkennung HIV-infizierter Zellen) sind im Durchschnitt pro Bild nicht mehr als 30 Objekte zu erkennen.

Bei dem erfindungsgemäßen Verfahren wird zum einen die vorliegende Datenmenge auf das jeweils nötige Maß reduziert, und zum anderen erfolgt eine Informationsauswertung auf den reduzierten Daten.

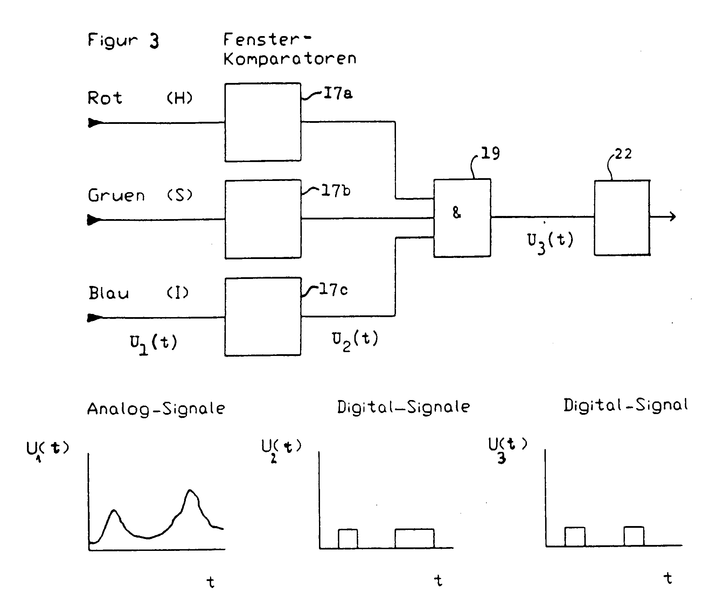

Für das erfindungsgemäße Verfahren ist es grundsätzlich unerheblich ob die Bilddaten als Analogsignal oder in digitalisierter Form vorliegen. Im folgenden wird daher nur von einem Bilddatenstrom gesprochen, der sowohl analog als auch digitalisiert sein kann. Entsprechend Figur 3 werden die drei Bilddatenströme (RGB oder HSI), bei denen es sich im dargestellten Fall um Analogsignale $U_1(t)$ handelt, durch eine Funktionseinheit 17 geschickt, die für jede Farbkomponente die Aufgabe eines Fensterkomparators 17 a, 17 b, 17 c erfüllt. Da die Größe des Fensters einem bestimmten Intensitätsbereich der betreffenden Farbkomponente entspricht, werden aus jedem Datenstrom diejenigen Abschnitte selektiert, bei denen die Zugehörigkeit zu einem Farbwert oder einem Farbwertbereich gegeben ist. Da der Ausgang eines Fensterkomparators nur "0" oder "1" ist, liegen am Ausgang der Fensterkomparator-Einheit nur Digitalsignale $U_2(t)$ vor. Die Ausgangssignale der Fensterkomparatoren 17 a-c werden mit einem UND-Gatter 19 verknüpft, an dessen Ausgang folglich nur dann ein "1"-Signal auftritt, wenn für den entsprechenden Punkt im RGB- (oder HSI-) Ausgangsbild alle drei Farbkomponenten in dem durch die Fensterkomparatoren eingestellten Bereich liegen.

Ist die Datenquelle vom HSI-Typ, genügt bei hinreichend einfachen Szenen auch die Verknüpfung von nur zwei Signalen (z.B. Hue und Saturation); in Ausnahmefällen kann nur das Hue-Signal weiterverarbeitet werden, da durch die eine Komparatoreinheit die Selektion bereits vollständig geleistet wird.

Bei einem System, das nicht mit einer Farbkamera, sondern einer Schwarz-Weiß-Kamera arbeitet, wird nur nach dem Grauwert selektiert, so daß in diesem Fall die vorgenannte Funktionseinheit nur einen statt drei Fensterkomparatoren enthält. In diesem Fall erübrigt sich das UND-Gatter 19.

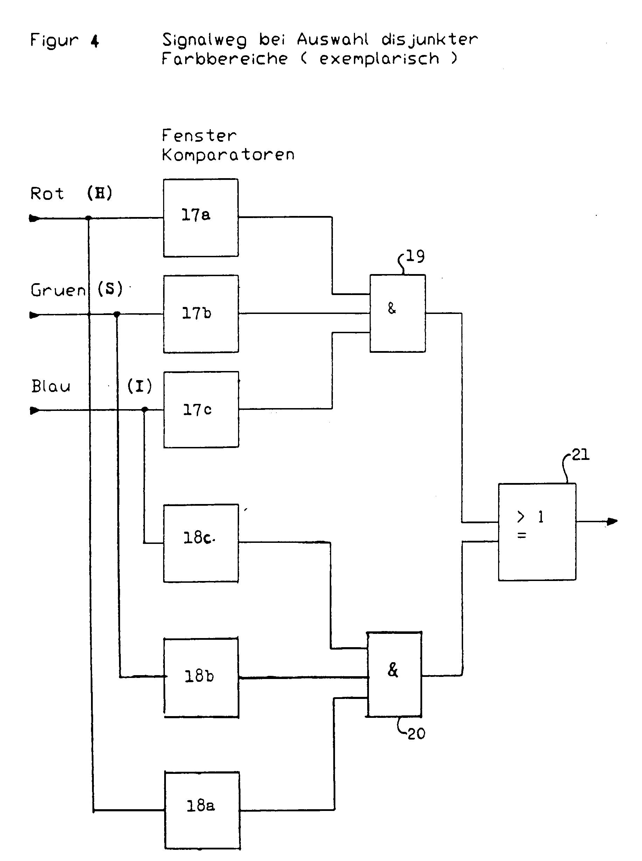

Entsprechend der Figur 4 können durch eine Verzweigung und Aufspaltung eines (oder mehrerer) der Bilddatenströme in mehrere Datenströme zusätzlich auch disjunkte Farbbereiche gleichzeitig als gültig definiert werden. Es ist also z.B. möglich, gleichzeitig einen von dunkelrot bis hellrot reichenden Farbbereich und einen bestimmten weiteren Farbton als "gültige" Farbbereiche zu erkennen. Für diesen Fall wird das Signal einer (oder mehrerer) Farbkomponente(n) einem (oder mehreren parallelen) weiteren Fensterkomparator(en) zugeführt, deren Ausgänge ggfs. über ein weiteres UND-Gatter miteinander verknüpft werden. In Fig. 4 ist als Beispiel dargestellt, daß die drei Farbsignale jeweils einer zweiten Einheit von Fensterkomparatoren 18 a, 18 b, 18 c zugeführt werden, die auf einen anderen Farbton als die Komparatoren 17 a-c eingestellt sind, beispielsweise auf Türkis. Die Ausgangssignale der zweiten Komparatoren werden für die Auswahl dieses Türkis-Tones in einem zweiten UND-Gatter 20 miteinander verknüpft, und die Ausgangssignale der UND-Gatter 19, 20 werden einer ODER-Schaltung zugeführt. Am Ausgang der ODER-Schaltung erscheint dann eine "1", wenn das Bildpunktsignal entweder dem von den Fensterkomparatoren 17 a-c eingestellten ersten Farbbereich oder dem mit den Fensterkomparatoren 18 a-c eingestellten zweiten Farbbereich entspricht.

Entsprechendes kann auch für die Grauwerte im Falle einer Schwarz-Weiß-Bildkamera durchgeführt werden.

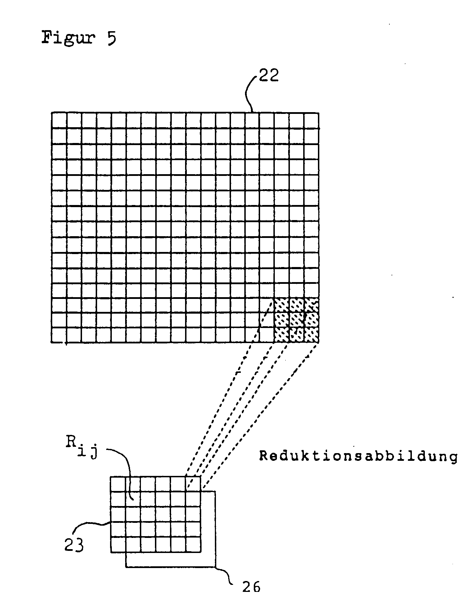

Die am Ausgang der UND-Schaltung 19 oder - bei Simultanauswahl von zwei Farbbereichen - am Ausgang des ODER-Gatters 21 erscheinenden Signale werden bei einer Ausführungsform der Erfindung, bei der die Auswertung der Bilddaten mit Hilfe eines Microprozessors erfolgt, zunächst in einem Zwischenbildspeicher 22 abgelegt (vgl. Fig. 5). Dieser Zwischenbildspeicher hat soviel Elemente wie das Ausgangbild der Kamera Bildpunkte hat. Die gespeicherten Werte sind aber nur "0" oder "1", je nachdem, ob der betreffende Bildpunkt des Ausgangsbildes mit dem von den Fensterkomparatoren eingestellten Farbton übereinstimmt.

Mit Hilfe der von der Videokamera gelieferten Synchronisationssignale ist es möglich, der Datenstrominformation die dazugehörige geometrische Position auf dem Bild zuzuordnen. Der am Ausgang des UND-Gatters vorliegende einkanalige, binäre Datenstrom wird für bestimmte Bildbereiche integriert (d.h. aufsummiert) und die Summenergebnisse werden in einem digitalen Speicher 23 zur Weiterverarbeitung im zweiten Schritt des Verfahrens abgelegt. Dabei besteht eine Korrespondenz zwischen den Matrizen des "rasterisierten" Ausgangsbildes und dem digitalen Speicher 23, der anschaulicherweise hier auch als Matrix dargestellt wird. Im folgenden wird dieser digitale Speicher als "Speichermatrix für das reduzierte Bild" oder einfacher auch als "reduziertes Bild" bezeichnet. Die Summation der "1" und (0)-Signale aus dem binären Datenstrom wird in der Weise vorgenommen, daß die Summe sich aus "1"-Signalen rechteckiger Teilmatrizen der Größe a·b auf dem Raster des Ausgangsbildes zusammensetzt, wobei a die Zahl der Elemente in horizontaler Richtung und b die Zahl der Elemente in vertikaler Richtung angibt. In dem in Figur 5 dargestellten Beispiel beträgt die Größe der Teilmatrix 3 x 3. Die Kantenlängen a und b der Teilmatizen richten sich nach dem Grad der gewünschten Datenreduktion. Bei dem vorher angeführten Beispiel könnten die Kantenlänge a und b jeweils 8 sein, so daß die numerischen Einträge in den Elementen des Speichermatrix für das reduzierte Bild jeweils die Summe der Werte in einer 8 x 8 Teilmatrix des Ausgangsbildes darstellen, also die Zahl der Elemente in dieser Teilmatrix, die den gesuchten Farbton haben. Die Größe des reduzierten Bildes beträgt in diesem Fall 512/8 x 512/8, also 64 x 64 Einheiten.

Die Reduktion muß nicht unbedingt auf rechteckigen Teilmatrizen erfolgen. Es können alle flächenfüllenden Vielecke benutzt werden. Es ändert sich nur die Datenstruktur des reduzierten Bildes entsprechend. Mit dem Eintragen der Summenergebnisse in das reduzierte Bild ist der erste Schritt des Verfahrens abgeschlossen.

Daran anschließend wird die im reduzierten Bild enthaltene Information ausgewertet. Dazu kann ein Microprozessor eingesetzt werden; die zur Auswertung nötigen Funktionen können aber auch durch eine digitale Hardware realisiert werden. Stellt man den Speicher 23, d.h. das reduzierte Bild als Matrix $\{R_{ij}\}$ dar, so können die Matrixelemente über ihre Koordinaten i,j angesprochen werden. Ein Matrixelement sei durch $R_{ij}$ gekennzeichnet. Dem reduzierten Bild wird nun eine zweite Datenebene gleicher Größe zugeordnet, die ebenfalls als Matrix $\{N_{ij}\}$ dargestellt wird, deren Zeilen- und Spaltenzahl identisch zu der Matrix $\{R_{ij}\}$ ist und deren Elemente mit $N_{ij}$ bezeichnet werden. Alle Elemente $N_{ij}$ dieser zweiten Ebene sind zu Beginn der Auswertung mit der Zahl "0" initialisiert. Jedes Bildelement $R_{ij}$ des reduzierten Bildes $\{R_{ij}\}$ wird der Reihe nach auf seinen Inhalt überprüft. Findet sich in einem Element $R_{ij}$ ein Inhalt (Summenergebnis), der größer ist als ein nach den Suchkriterien festzulegender Schwellwert SW, und ist dazu in dem in der Position entsprechenden Element $N_{ij}$ der zweiten Datenebene $\{N_{ij}\}$ noch kein von "0" verschiedener Index eingetragen, so wird in diesem Element $N_{ij}$ der zweiten Ebene $\{N_{ij}\}$ ein laufender Index $I_1$ (I > 0) eingetragen; weiterhin werden für beide Ebenen $\{R_{ij}\}$ und $\{N_{ij}\}$ die Elemente untersucht, die sich in der Umgebung der Elemente $R_{ij}$ bzw $N_{ij}$ innerhalb eines Maskenfeldes befinden. Als Maske wird vorzugsweise eine kleine Teilmatrix der Größe u·v verwendet; auch hier muß die Maske nicht unbedingt rechteckförmig sein, alle flächenfüllenden Geometrien sind möglich. Die Größe der in diesem Ausführungsbeispiel verwendeten Teilmatrix (u·v) kann beispielsweise 3 x 3 (u=v=3) oder 5 x 5 (u=v=5) sein. Die Teilmatrix wird so gelegt, daß das zuvor gefundene Bildelement "ij" im reduzierten Bild, dessen Inhalt größer als der Schwellwert SW war, in ihrer Mitte liegt. Alle Elemente der Datenebene $\{R_{ij}\}$, die innerhalb der Teilmatrix liegen, werden mit dem eben beschriebenen Verfahren weiterbehandelt. Z.B. wird um das benachbarte Element $R_{i+1,j}$ wieder eine Teilmatrix der Größe u·v gelegt, die Werte der Elemente innnerhalb der Teilmatrix werden überprüft, und diese Elemente werden auf der zweiten Datenebene $\{N_{ij}\}$ dann mit dem gleichen Index $I_1$ versehen, wenn ihre Werte auch größer als der Schwellwert SW sind. Anschaulich gesehen, wird also das Datenfeld $\{R_{ij}\}$ mit einer Matrix der Größe u·v abgetastet. Finden sich in einer solchen Teilmatrix keine Elemente $R_{mn}$, deren Wert größer als der Schwellwert SW ist, wird die Suche mit dem Feld fortgesetzt, das nach dem Feld "ij" normalerweise untersucht worden wäre, z.B. mit dem Feld "i,j+1".

Mit diesem Abtastverfahren werden also diejenigen Elemente des reduzierten Bildes, die voneinander nicht weiter als eine Breite u bzw. eine Länge v der Abtastmatrix (Teilmatrix) entfernt sind, in der zweiten Datenebene $\{N_{ij}\}$ mit dem gleichen Index versehen und damit als zusammengehörig erkannt. Über die Flächenausdehnung des als zusammengehörig angesehenen Objekts kann eine gute Aussage anhand der Summe aller in der Matrix $\{N_{ij}\}$ gleich indizierten Elemente der Datenebene $\{R_{ij}\}$ gemacht werden. Durch die Angabe eines Schwellwertes kann das Bildrauschen unterdrückt werden, da einzelne "gültige" Matrixelemente der Ausgangsmatrizen des Bildes innerhalb der Integrationsfläche nur kleine Beträge zur Summe liefern.

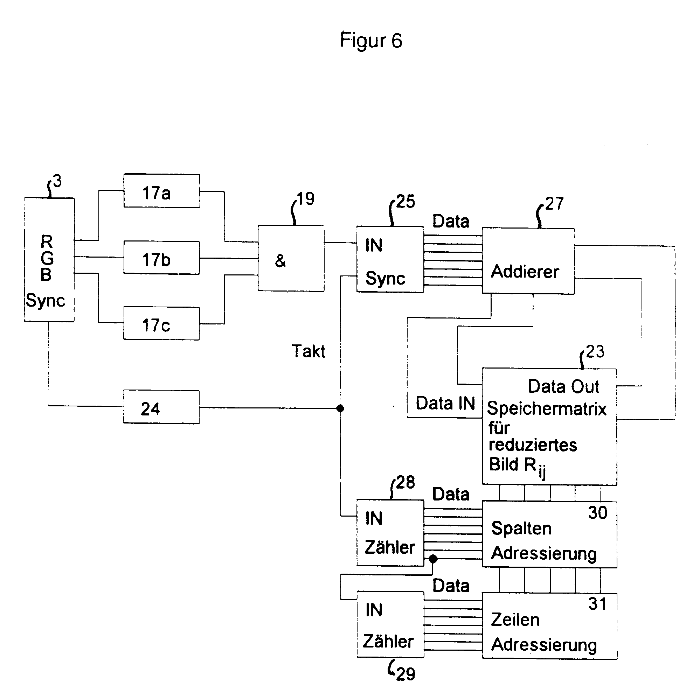

Bei der in Figur 6 dargestellten ersten Ausführungsform der erfindungsgemäßen Vorrichtung kann die Farbraumtransformation der RGB-Videosignale optional mit Analogschaltungen und insbesondere mit Operationsverstärkern durchgeführt werden (dies ist in Fig. 6 nicht dargestellt). Die Auswahl der "gültigen" Matrixelemente kann mit Hilfe von analogen Fensterkomparatoren 17 a-c, denen ggfs. ein Sample-and-Hold Glied vorgeschaltet ist, realisiert werden; diese Fensterkomparatoren bewerten die jeweiligen als Analogsignale vorliegenden Bildsignalkomponenten nur dann mit einem "1"-Ausgangssignal, wenn die RGB- oder HSI-Komponenten, bei einer Schwarz-Weiß-Kamera der Grauwert, jeweils in einem bestimmten Bereich liegen. Die Ausgangssignale der den Bildsignalkomponenten zugeordneten Fensterkomparatoren werden einem UND-Gatter 19 zugeführt. Aus dem Synchronisationssignal der Videokamera wird mit einem Pixelsynchronisationsgenerator 24 ein Pixel-Synchron-Signal (PSS) abgeleitet, das bei der weiteren Verarbeitung als Taktsignal genutzt wird. Das Signal am Ausgang des UND-Gatters 19 wird mit Hilfe des PSS in Pixel, d.h. Bildelemente zerlegt. Dies ist eine Form der Digitalisierung, denn die Pixel können entsprechend dem Ausgang des UND-Gatters entweder den Wert "0" (nicht "gültig", also nicht von der an den Komparatoren eingestellen Farbqualität) oder "1" ("gültig") annehmen. Diese numerischen Werte werden nun abhängig von ihrem geometrischen Ursprung

EP 0 617 815 B1

im Kamera-Ausgangsbild zu den Werten der Matrixelemente $R_{ij}$ des reduzierten Bildes $\{R_{ij}\}$ umgewandelt.

Bei dem in Figur 6 dargestellten Ausführungsbeispiel wird der in Figur 5 gezeigte Zwischenbildspeicher nicht benötigt, da die Signale direkt einem getakteten Addierer und die aufaddierten Werte in den Speicher 23 für das reduzierte Bild überführt werden. Da jeweils Felder der Ausdehnung a·b des von der Kamera gelieferten Ausgangsbildes einem Element des reduzierten Bildes entsprechen, werden zur Gewinnung des reduzierten Bildes die von dem UND-Gatter gelieferten Digitalwerte in Periodenabschnitten von a Pixelsynchronsignalen in einem ersten Addierer 25 aufaddiert, und das Summenergebnis wird in das entsprechende Element des Speichers 23 für das reduzierte Bild eingetragen. Wenn die Bildaufnahmekamera 3 je Zeile 512 Bildpunkte liefert, und die Reduktion in horizontaler Richtung um a = 8 Spalten erfolgt, werden 512/8 = 64 Summenwerte geliefert und in den 64 entsprechenden Flementen $R_{ij}$ des Speichers 23 eingetragen. Da die Reduktion des Ausgangsbildes in vertikaler Richtung in Abschnitten von jeweils b Zeilen vorgenommen wird, müssen bis einschließlich des b-ten Zeilendurchlaufs des Ausgangsbildes die vom ersten Addierer 25 gelieferten Summen den Werten, die in den Elementen der betreffenden Zeile des reduzierten Bildes eingetragen sind, hinzuaddiert werden. Diese Addition erfolgt mit einem auf den ersten Addierer folgenden zweiten Addierer 27, dessen einer Eingang mit dem ersten Addierer 25 und dessen anderer Eingang mit dem Datenausgang des Speichers 23 für das reduzierte Bild verbunden sind. Bei der Adressierung des Speichers 23 wird also dessen Spaltenadresse nach jeweils a Takten des Pixelsynchronsignals um 1 erhöht; nach a·b Takten wird die Spaltenadresse für den Speicher 23 des reduzierten Bildes wieder auf Null (=Zeilenanfang) gesetzt und zugleich die Zeilenadresse um 1 erhöht. Die Zeilenadresse inkrementiert sich alle a·b Takte des Pixelsynchronsignals PSS und wird wieder auf Null gesetzt, wenn ein ganzes Kamera-Bild verarbeitet worden ist. Die Adressierung des Speichers 23 für das reduzierte Bild erfolgt dementsprechend mit "Frequenzteiler-Zählern" 28, 29, die die Adreßdecoder 30, 31 ansteuern.

Im einzelnen wird das Ausgangsignal aus dem UND-Gatter 19 synchron zum PSS in dem ersten Addierer 25 aufsummiert. Dieser Addierer 25 summiert, getaktet vom PSS zunächst (b-1) "Pixel". Beim b-ten Pixel addiert er zusätzlich den Inhalt der aktuell über die Adressiereinheit angewählten Speicherzelle $R_{ij}$ des reduzierten Bildes und schreibt des Ergebnis anschließend in eben diese Zelle $R_{ij}$ zurück. Auf diese Weise wird der das reduzierte Bild darstellende Speicher 23 in der oben beschriebenen Form mit Daten gefüllt.

Bei einer zweiten Ausführungsform der Erfindung, die auch apparativ realisiert wurde, werden zur Gewinnung des reduzierten Bildes die Videosignale zunächst mit einem sogenannten Framegrabber digitalisiert. Ein Framegrabber ist eine hybride Digital/Analog-Schaltung, die ein Videosignal direkt in eine digitale Speichermatrix ablegt. Es werden in dem angeführten Fall drei Speicherebenen (für Rot, Grün und Blau) mit je 512 x 512 Speicherelementen aufgefüllt. Die Speichertiefe beträgt zum Beispiel ein Byte pro Speicherzelle. Der Framegrabber ist in der Lage, die Daten vor der Speicherung in den HSI-Raum zu transformieren, so daß die Speicherebenen optional die HSI Information enthalten können. Das Bild liegt also digital vor. Mit Hilfe eines digitalen Signalprozessors (DSP) und einem entsprechenden Programm wird nun eine "two sided limiter"-Funktion realisiert, die wie ein Fensterkomparator wirkt. Die drei separaten Speicherebenen werden durch den "two sided limiter" verarbeitet und pixelweise einer ebenso auf dem DSP programmierten "UND"-Funktion zugeführt. Das Ergebnis dieser "UND"-Funktion entspricht dem binären Datenstrom nach dem digitalen "UND"-Gatter bei dem oben beschriebenen Ausführungsbeispiel. Die Werte ("0" und "1") aus der "UND" Funktion können nun in einem weiteren Speicher, der die Größe 512 x 512 Elemente hat, abgelegt und von dort aus weiterverarbeitet werden oder direkt in das reduzierte Bild, das ebenfalls im Adreßraum des DSP liegen kann, summiert werden.

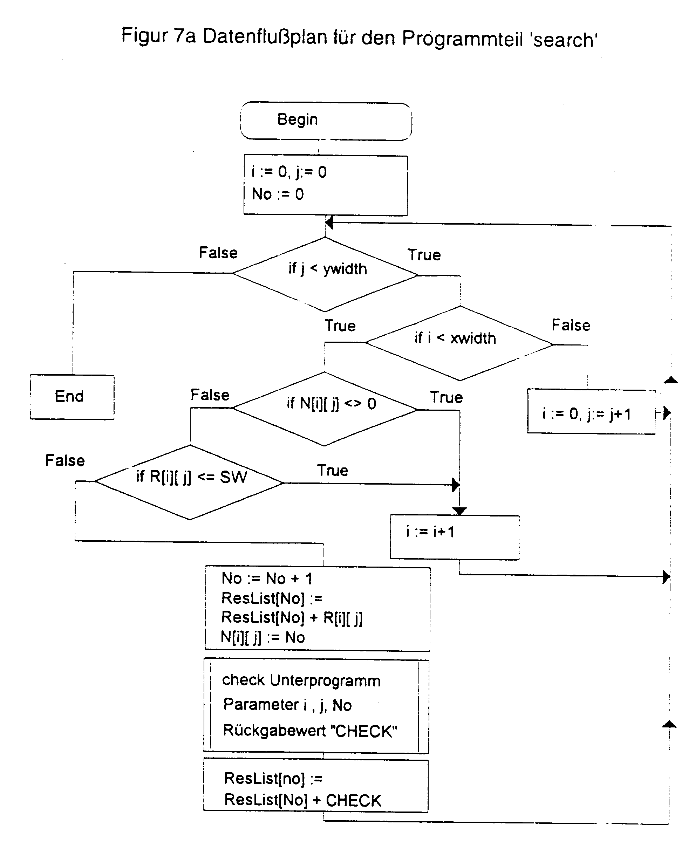

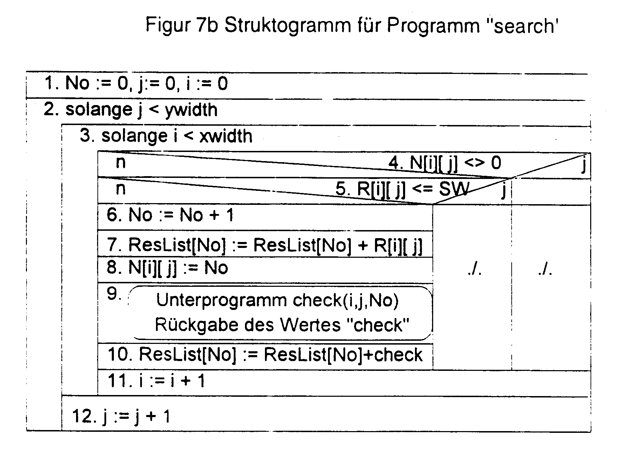

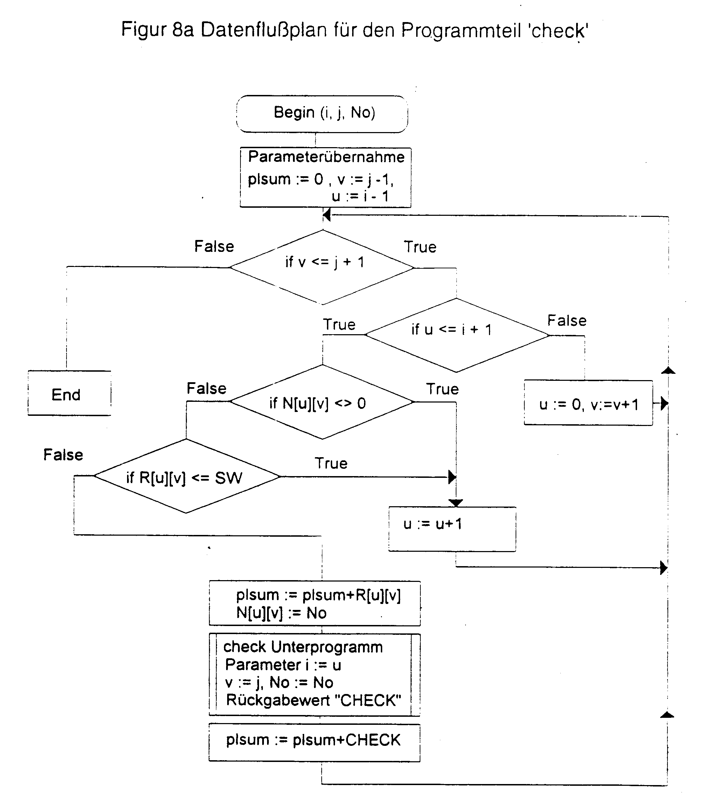

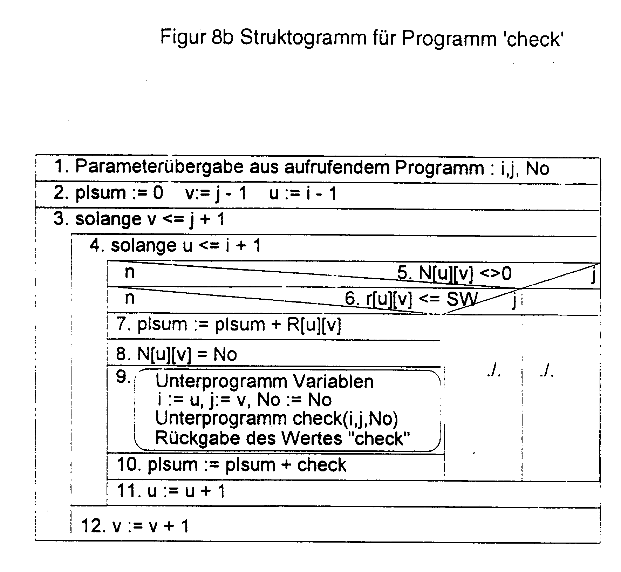

Der nachfolgende Abschnitt des erfindungsgemäßen Verfahrens, der die Auswertung der Daten des reduzierten Bildes $\{R_{ij}\}$ beinhaltet, wird hier anhand eines Algorithmus beschrieben. Dazu dienen die Datenflußpläne nach den Figuren 7a, 8a, die zugehörigen Nassi-Schneidermann-Struktogramme nach den Figuren 7b, 8b und die nachfolgende Beschreibung des Vorgangs in der Programmiersprache "C" . Als Datenstrukturen dienen:

R[i] [j] , zweidimensionales Datenfeld als Repräsentant des reduzierten Bildes, N[i][j] ebensolches zur Indizierung der Cluster, ResList[i] Liste für gefundene Cluster, wobei der Index in der Liste als ordinale Nummer gesehen werden kann, während der Eintrag die Fläche des Clusterobjekts in "Pixeln" angibt. SW stellt den Schwellwert zur Unterdrückung von Bildrauschen dar.

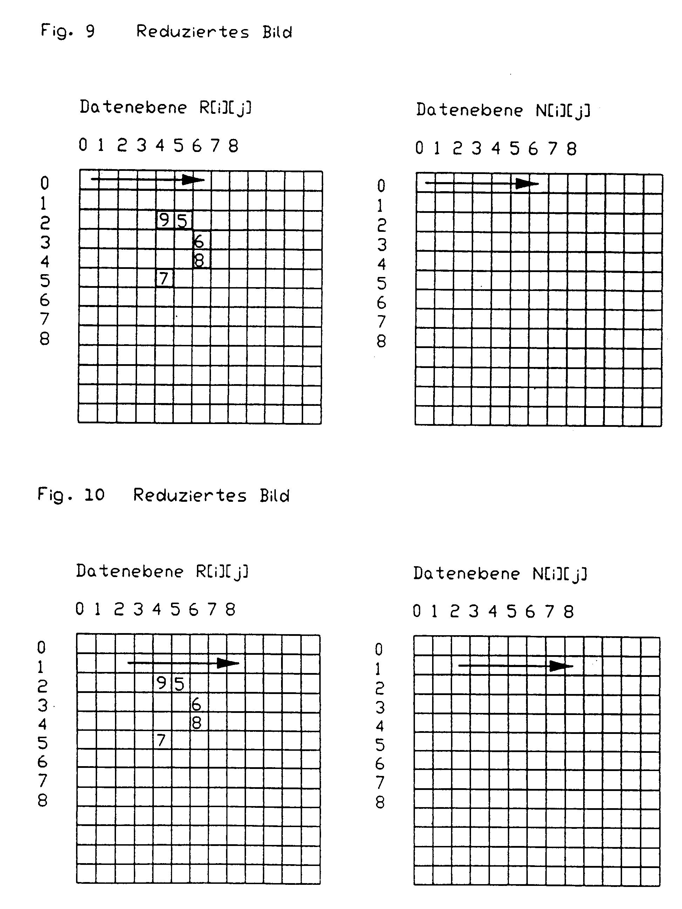

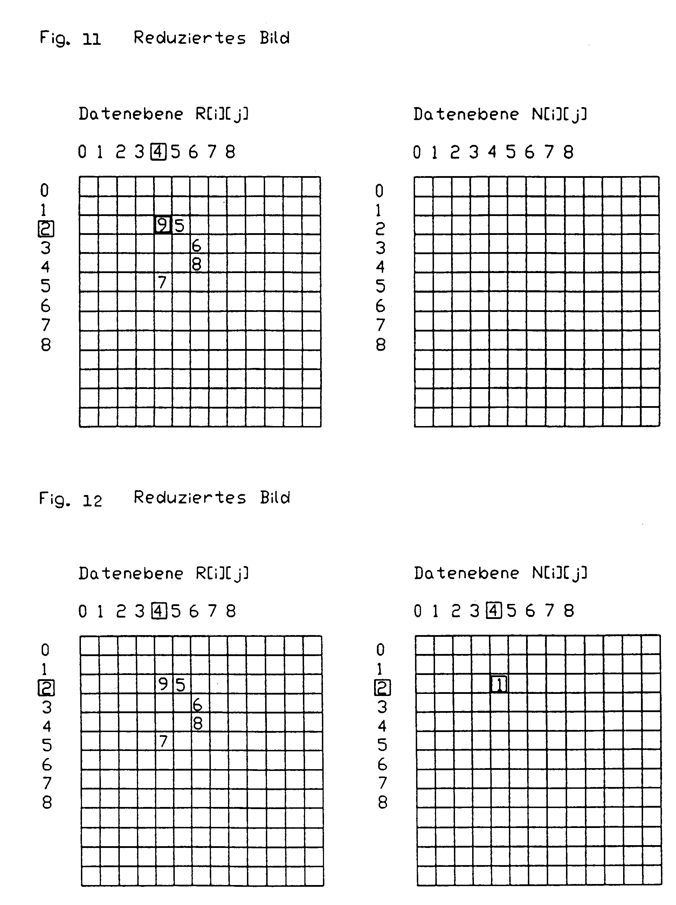

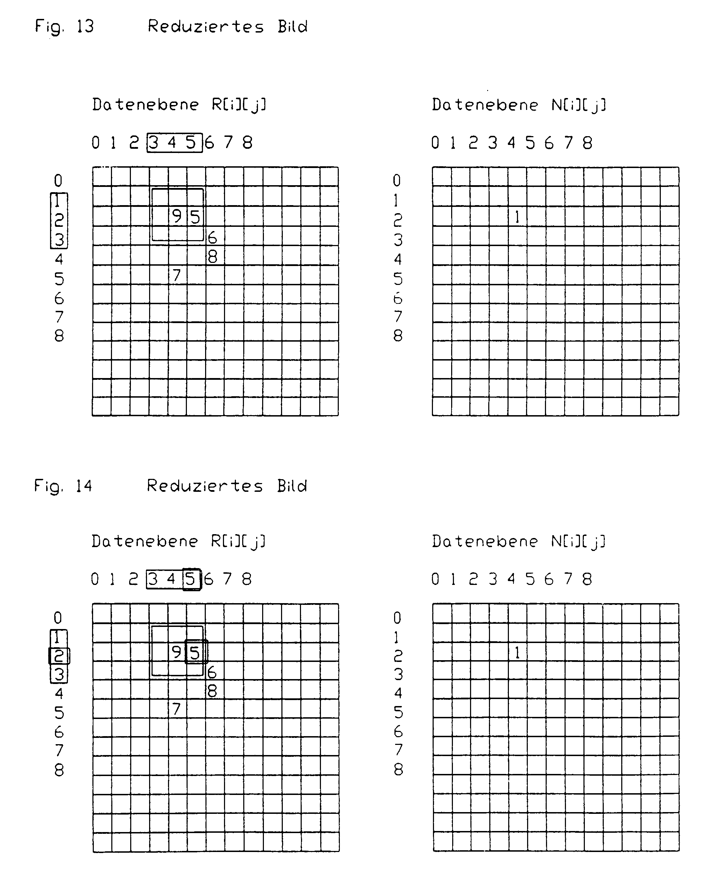

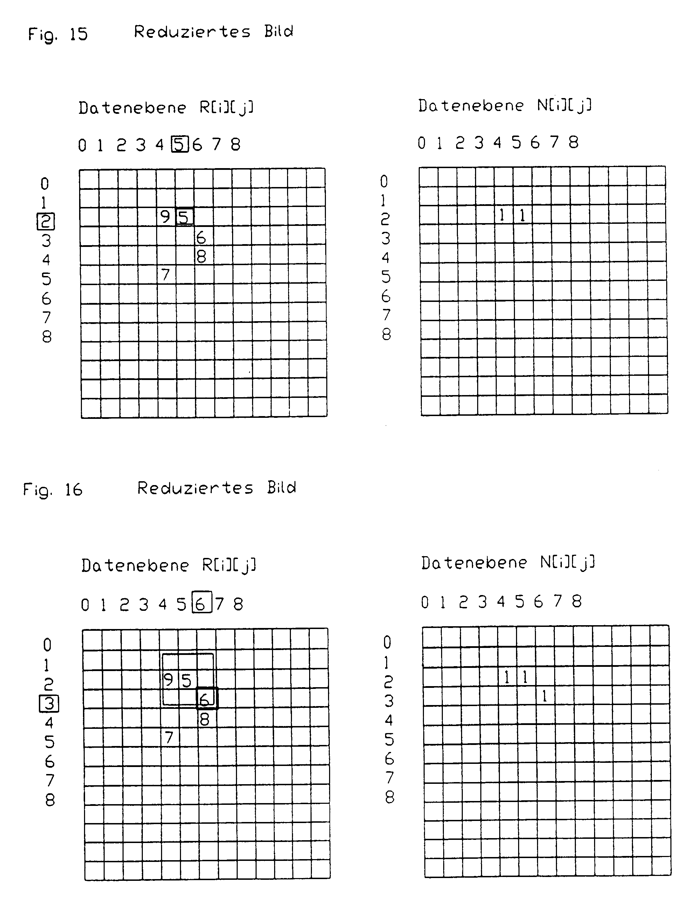

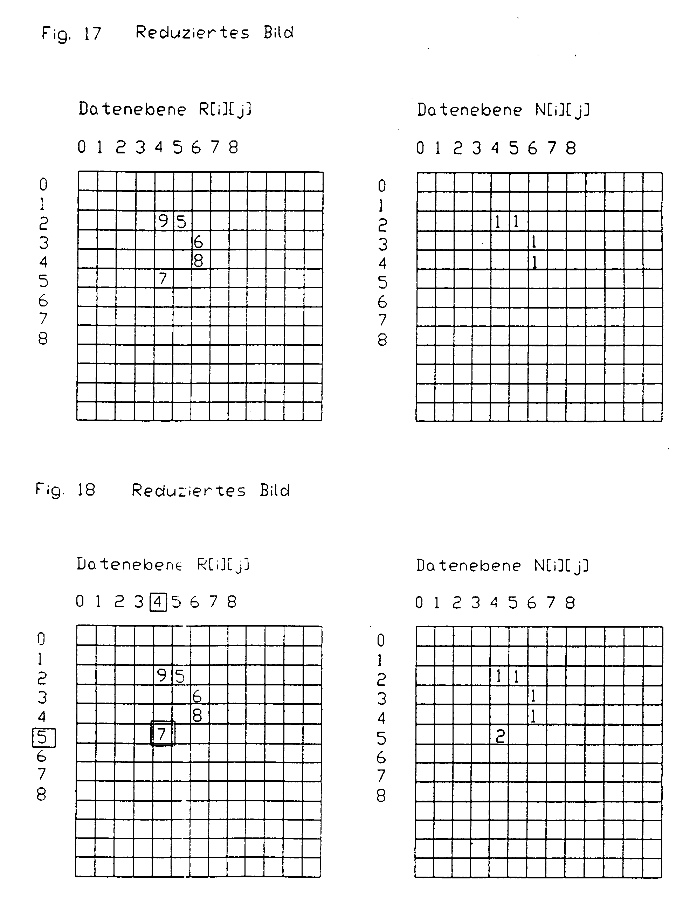

Die einzelnen Phasen der rekursiven Abtastung sind in den Figuren 9 - 18 dargestellt. In ihnen entsprechen die Zeilen dem Index i, die Spalten dem Index j der Matrizen $\{R_{ij}\}$ und $\{N_{ij}\}$. Im linken Teil der Figur ist jeweils die Matrix $\{R_{ij}\}$ und im rechten Teil die Matrix $\{N_{ij}\}$ dargestellt.

Die hier gewählte rekursive Variante der Implementierung ist nicht notwendiger Bestandteil der Verfahrens, sondern dient in erster Linie der einfachen und eleganten Darstellung. Die Lösung der auftretenden Probleme an den Bildrändern sowie die Optimierung des Algorithmus und der zugrundeliegenden Datenstruktur wird bei der hier gegebenen Darstellung aus Gründen der Klarheit weggelassen.

6

Programmteil "search":

```
void search(void)
/* Sucht zeilenweise das reduzierte Bild ab */
     {
     int i,j;          /* Zähler */
     int No = 0;       /* fortlaufende Objektnummer */

     for ( j=0 ; j<ywidth ; j++ )         /* y Zähler */
          for( i=0 ; i<xwidth ; i++ )     /* x Zähler */
               {
               if (N[i][j] != 0)
               /* wenn bereits zu einem */
               /* Objekt gehörig, weiter    */
                    continue;
               if (R[i][j] <= SW )
               /* wenn leer oder kleiner als*/
               /* Schwellwert, weiter */
                    continue;


               else
               /* sonst :*/
                    {
                    No++;
                    /* erhöhe laufende Nummer */
                    ResList[No]   += R[i][j];
                    /* addiere Pixel in Ergebnis  */
                    /* Liste*/
                    N[i][j] = No;
                    /* weise dem Object */
                    /* Nummer zu */
                    ResList[No] += check(i,j,No);
                    /* addiere alle zusammen-*/
                    /* hängenden R[i][j] */
                    /* Elemente */
                    }
               }
     }
```

Figur 7a zeigt den Datenflußplan dieses Programms, Figur 7 b das entsprechende Nassi-Schneidermann Struktogramm.

Programmteil "check":

```
int check(int i, int j, int No)
/* rekursive Such-Routine */
/* für 3x3 Kernels */
        {
    int plsum = 0; /* Pixel Summe */
    int u,v;         /* Zähler */

    for ( v= j-1 ; v <= j+1 ; v++ )
    /* y Zähler */
        for ( u = i-1 ; u <= i+1 ; u++ )
        /* x Zähler*/
            {
            if ( N[u][v] != 0 )
            /* wenn bereits zu einem */
            /* Object gehörig, weiter */
                continue;
            if ( R[u][v] <= SW )
            /* wenn leer oder kleiner als */
            /* Schwellwert, weiter */
                continue;
            else
            /* sonst : */
                {
                plsum += R[u][v];
                /* addiere Pixelsumme*/
                N[u][v] = No;
                /* weise Nummer zu  */
                plsum += check(u,v,No);


                /* rekursiver Aufruf     */
                }
            }
    return(plsum);
    /* Gib Ergebnis an aufrufende Funktion zurück */
    }
```

Figur 8a zeigt den Datenflußplan dieses Programms, Figur 8 b das entsprechende Nassi-Schneidermann-Struktogramm.

Nach dem vollständigen Durchlauf der Funktionen durch die Zählbereiche finden sich im ResList-Array die per Listenindex durchnumerierten Ergebnisse. Es besteht natürlich auch die Möglichkeit, die geometrischen Positionen der "Fundorte" anhand von i,j mit abzuspeichern.

Die Einträge in das Ergebnis-Array stellen die Fläche (in Pixel) der jeweils als zusammenhängend angesehenen Objekte dar. Aus der Länge der gefüllten Liste bzw. der Zahl der auf der zweiten Ebene $\{N_{ij}\}$ vergebenen Indices läßt sich die Gesamtzahl der gefundenen Objekte entnehmen.

Weitere Verfeinerungen des Suchverfahrens können einfach durchgeführt werden. So kann durch einen weiteren Parameter die Rauschunterdrückung implementiert werden, indem nur bei Zählergebnissen die größer als eine Zahl n sind, Objektnummern (Indices auf der zweiten Ebene $\{N_{ij}\}$ vergeben werden. Das entspricht einem Aussortieren von kleinen Objekten. Umgekehrt können große Objekte durch die Bedingung aussortiert werden, daß das Zählergebnis kleiner als eine bestimmte Zahl n ist. Bei einer digitalen Realisierung kann auch von der rechteckigen Form der Felder, die einem Element im reduzierten Bild entsprechen, abgegangen werden, ebenso kann die Abtastmatrix anders als rechteckig sein. Die Algorithmen werden dann entsprechend kompliziert.

Im folgenden wird ein Ausführungsbeispiel für die Auswertung des reduzierten Bildes mit der Abtastmatrix beschrieben.

Schritt 1 :

Die Speichermatrix {R$_{ij}$} ist mit einem größeren, zusammenhängenden Objekt und einem einzelnen Objekt gefüllt. Diese werden durch die Pixelsummen an den Speicherstellen R$_{ij}$ repräsentiert die ungleich Null sind. Leere Speicherstellen sind nicht extra mit Null gekennzeichnet.
Die zweite Speicherebene {Nij}.
Der Algorithmus beginnt nun bei dieser Ausgangsposition mit der doppelten Schleife
      for ( j=0 ; j<ywidth ; j++ )
           for ( i=0 ; i<xwidth ; i++ )
             .........
wobei ywidth und xwidth die laterale Ausdehnung des reduzierten Bildes darstellen. Das bedeutet, daß alle Felder des reduzierten Bildes werden von links nach rechts (zeilenweise) und von oben nach unten dem Suchverfahren unterzogen.
(Figur 9)

Schritt 2 :

Untersucht wird zunächst (für alle i und j) die Bedingung:
      if ( N[i] [j] != 0 )
           continue;
d.h. es wird in der zweiten Speicherebene des reduzierten Bildes {N$_{ij}$} überprüft, ob das zu untersuchende Feld bereits indiziert ist. Ist dies der Fall wird ohne weitere Aktion die Suche mit dem nächsten Feld fortgesetzt. Ist das Indexfeld jedoch gleich Null, wird das nächste Kriterium betrachtet.
(Figur 10)

Schritt 3:

Nun wird das zweite Kriterium überprüft, nämlich ob der in dem Element R$_{ij}$ gespeicherte Summenwert den Schwellwert SW übersteigt:
      if ( R[i] [j] <= SW )
           continue;
Wenn sich, vorausgesetzt die Suche wurde im vorherigen Schritt für dieses Feld nicht abgebrochen, in dem aktuellen Feld R$_{ij}$ kein Summenergebnis befindet, wird die Suche mit dem nächsten Feld fortgesetzt. In dem in den Figuren 10 - 16 dargestellten Beispiel wird dies bis zum Speicherfeld [i=4,j=2] der Fall sein.
(Figur 11)

Schritt 4 :

Bei der Index-Kombination [i=4,j=2] wir nun beim Testen der Bedingung
      if ( R[4] [2] <= SW )
das Ergebnis FALSE geliefert, so daß der Algorithmus mit der

```
                        else
                           {
                           No++ ;
                           N[4][2]  =  No;
                           ResList[No]  +=  R[4][2];
```

Anweisung fortgesetzt wird. An dieser Stelle ist also zum ersten Mal ein (Teil-)Objekt gefunden worden. "No" ist ein Zähler, der bei jedem Durchgang durch diesen Anweisungsteil um eins erhöht wird (No++). Zunächst wird dem Objekt mit No eine laufende Objektnummer zugewiesen (durch Eintragen von No in den korrespondierenden Anteil des reduzierten Bildes N[4][2] = No;). Diese Nummer ist eindeutig für das Objekt und wird auch, wie man sehen wird, an benachbarte Speicherzellen vergeben, die zum selben Objekt gehören. Dann wird der Summenanteil des reduzierten Bildes in die Ergebnisliste addiert ( ResList[No] += R[4][2] ).
(Figur 12)

ResList :

```
            Index       Wert

            1           9
            2           0
            3           0
            4           0

            . . .       . . . . . . . . . .
```

Schritt 5

An dieser Stelle erfolgt nun der Aufruf der check(i,j,No) Routine. Um die aktuelle Position [i=4,j=2] wird eine 3 x 3 Matrix von Feldern abgesucht. (Im Prinzip müßte nur die untere Dreiecksmatrix untersucht werden, zur Vereinfachung sei hier aber der ganze 3 x 3 Kernel untersucht.)
(Figur 13)

Schritt 6

In check(i,j,No) wird nun die 3 x 3 Umgebung des aktuellen Feldes [i=4,j=2] untersucht. Dabei ist das Vorgehen sehr ähnlich wie zuvor. In der 2-fachen Schleife
    for ( v=j-1 ;v<j+1 ; v++ )
        for ( u = i-1 ; u<i+1 ; u++ )
wird zunächst untersucht, on ein Feld bereits indiziert ist ' if(N[u][v] != 0 ) continue; '
Ist dies der Fall, wird ohne Aktion fortgefahren, da es sich bei eben diesem Feld um ein bereits gefundenes und registriertes handelt.
Sonst wird überprüft, ob sich ein Zählergebnis >0 in dem Summenanteil des reduzierten Bildes befindet ' if ( R[u][v] <= SW ) continue;'. Ist dies nicht der Fall wird ebenso ohne Aktion fortgefahren.
Beide Bedingungen sind in dem hier vorgegebenen Beispiel erfüllt bis [u=5,v=2].
(Figur 14)

Schritt 7

Bei [u=5,v=2] ist die Bedingung 'if ( R[u][v] == 0 )' nicht erfüllt. Die Routine wird mit dem

```
            else
                {
                plsum += R[u][v];
                N[u][v] = No;
                plsum += check[u,v,No];
                }
```

Anweisungsteil fortgesetzt. Das heißt, daß zunächst der gefundene Wert aus dem reduzierten Bild auf den lokalen Summenzähler 'plsum' addiert wird,
(plsum += R[u][v]), anschließend wird dem gefundenen Feld (= Teilobjekt) die aktuelle laufende Nummer No zugewiesen (N[u][v] = No), und schießlich wird die Routine check(i,j,No) mit den aktuellen Koordinaten als Ausgangsparametern aufgerufen.
In diesem Fall also check (u=5,v=2,No=1);

plsum = 5

(Figur 15)

Schritt 8

Erneut wird eine 3 x 3 Matrix über das aktuelle Feld gelegt und auf seinen Inhalt untersucht. Die bereits indizierten Felder R[4][2]/N[4][2] und R[5][2]/N[5][2] werden ignoriert. Bei R[6][3]/N[6][3] wird jedoch check(i=6,j=3,No=1) aufgerufen. Dies führt zu einer erneuten Anwendung der 3 x 3 Test-Matrix.

plsum = 11

(Figur 16)

Schritt 9

Nachdem auch das Zählergebnis bei den Koordinaten [u=6,v=4] registriert wird, bricht die Rekursion ab, da in der 3 x 3 Umgebung des Feldes [u=6,v=4] keine neuen Einträge gefunden werden. Die Pixel-Summen 'plsum' aus den aufeinanderfolgenden check(u,v,No) Aufrufen werden nacheinander aufaddiert und an die aufrufende Routine zurückgereicht ( return(plsum) ). Zuletzt wird die Summe aller gefundenen Pixel in die Ergebnisliste in das Feld mit der Nummer No eingetragen ( ResList[No] += check(i,j,No); ).

plsum = 19

ResList :

| Index | Wert |
|-------|------|
| 1 | 21 |
| 2 | 0 |
| 3 | 0 |
| 4 | 0 |
| . . . | . . . . . . . . . . |

(Figur 17)

Schritt 10

Nach Abbruch der Rekursion wird die Suche an der Stelle fortgesetzt, an der die Routine check(i,j,No) erstmals aufgerufen wurde, nämlich bei [i=4,j=2]. Alle zunächst folgenden Felder sind leer oder bereits indiziert, so daß sie nicht weiter durchsucht werden. Erst bei den Koordinaten [i=4,j=5] wird ein neues Objekt erkannt und mit der laufenden Nummer No=2 versehen.
(Figur 18)

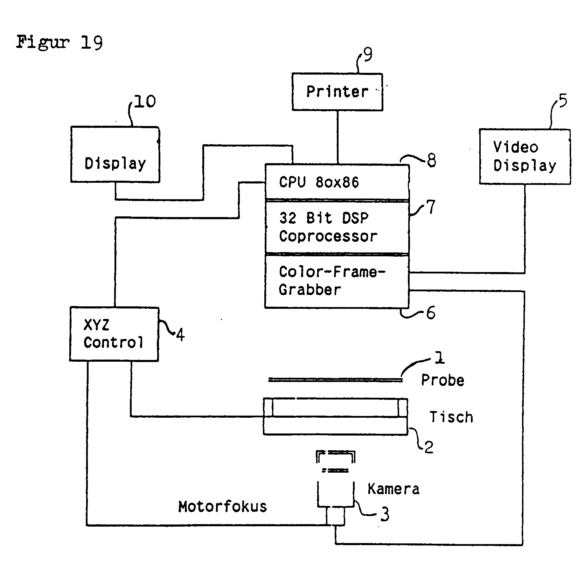

Anhand von Figur 19 wird nun ein Ausführungsbeispiel für die gesamte Vorrichtung zur Durchführung des erfindungsgemäßen Verfahrens beschrieben, die für die Bestimmung von Clustern HIV-infizierter Zellen eingesetzt wird.

Die Probe 1, beispielsweise eine 96-Loch-Microtiterplatte, befindet sich auf einem X-Y-Tisch 2, der unter einer Steuerung 4 die Probe in X-Y-Richtung anordnet. Unterhalb des Tisches 2 befindet sich die Videokamera 3, die von der Steuerung 4 in der zur Ebene der Probe senkrechten Z-Richtung verfahren werden kann. Von der mit einem Mikroskop-Objektiv ausgerüsteten Kamera 3 wird von der von oben belichteten Probe 1 ein Bild aufgenommen und der aus einem Color-Framegrabber 6, einem Coprozessor 7 und einer Zentraleinheit 8 bestehenden Bildverarbeitungseinrichtung zugeführt. Das von der Kamera aufgenommene Bild ist in einer Videoanzeigevorrichtung 5 sichtbar, die Ergebnisse der Bildauswertung werden mit dem Drucker 9 ausgedruckt.

Das Bildfeld der Kamera beträgt ca. 1,1 mm x 0,8 mm. Eine Vertiefung in einer Microtiterplatte hat den Durchmesser 6,5 mm. Um diese Kreisfläche als Gesamtheit erfassen zu können, wird in einem meandrierenden Vorschubverfahren der Kreis in 54 ( 6 x 9 ) rechteckige Bilder abgescannt.

Es hat sich gezeigt, daß für diese Anwendung die Bildselektion nur auf zwei Informationsebenen erfolgen muß. Der Einsatz einer HSI Transformation ist hier sinnvoll. Genutzt wird die Farbton (HUE)-Information und die Farbsättigungsinformation.

Das analoge Videosignal aus der Kamera wird mit einem Framegrabber digitalisiert und in drei 512 x 512 "pixel" großen Digitalspeichern mit 1 Byte Speichertiefe abgelegt. Die HSI-Transformation findet zur Digitalisierzeit mit Hilfe eines Application-Specific-IC statt. Die Auswertung der Daten geschieht wie oben beschrieben. Ein digitaler Signalprozessor (DSP) realisiert die Fensterkomparatoren sowie das "UND"-Gatter und legt die so vorverarbeiteten Daten in einem "Binärbild" (auf den Matrixelementen stehen nur "0" oder "1") der Größe 512 x 512 Einheiten ab. Dieses Binärbild wird der beschriebenen Anweisung entsprechend auf das reduzierte Bild abgebildet. Die Summation der Teilbilder übernimmt der DSP. Auf dem reduzierten Bild wird dann die Suche nach den Clustern mittels des oben beschriebenen Programms von dem DSP durchgeführt.

Die Einstellung der Schwellwerte der Fensterkomparatoren geschieht mit graphischer Unterstützung auf dem Computer-Monitor. Zu diesem Zweck wird von einem, vom Benutzer frei zu wählenden Bildausschnitt ein Histogramm für die Verteilung des Farbwertes (HUE) und für die Verteilung der Farbsättigung (Saturation) erstellt. Durch verschiebbare Schreibmarken können in beiden Histogrammen die "Durchlaßbereiche" der Fensterkomparatoren ausgewählt werden. Durch eine anschließende Anzeige der Folgen dieser Filterung auf der Videoanzeigevorrichtung besteht die Möglichkeit der unmittelbaren Kontrolle.

**Patentansprüche**

1.	Verfahren zum automatischen Erkennen von Objekten, insbesondere von unregelmäßig und/oder unzusammenhängend geformten Objekten wie beispielsweise Zellclustern, bei dem mit Hilfe einer Video-Kamera von dem zu untersuchenden Objektraum ein Ausgangsbild mit n·m Bildpunkten aufgenommen wird, **gekennzeichnet durch**
	folgende weitere Verfahrensschritte:
	a) die von der Video-Kamera (3) gelieferten Bildpunkt-Signale werden in einem Fensterkomparator (17; 17 a, 17b, 17c) mit einem oberen und einem unteren Schwellwert verglichen;
	b) entsprechend dem Ausgangssignal des Fensterkomparators wird für einen Bereich (a·b) des Ausgangsbildes die Zahl der zwischen den Schwellwerten liegenden Bildpunktsignale bestimmt, und diese Zahl wird in einem Element einer Speichermatrix (23) für ein reduziertes Bild gespeichert, wobei die Position eines jeden Matrixelementes in der Speichermatrix (23) der Position des zugeordneten Bereiches (a·b) im Ausgangsbild der Video-Kamera (3) entspricht;
	c) das in der Speichermatrix (23) enthaltene reduzierte Bild wird mit einer Maske abgetastet, wobei das zentrale Element der Maske über ein Element des reduzierten Bildes gelegt wird, dessen Inhalt einen vorgegebenen Wert SW überschreitet, und sodann werden diejenigen Matrixelemente innerhalb der Maske, deren Inhalt ebenfalls den vorgegebenen Wert SW übersteigt, ermittelt und als mit dem Ausgangsmatrixelement zusammengehörig angesehen und mit dem gleichen Index I versehen, wobei dieser Vorgang an jedem Matrixelement der Speichermatrix (23) für das reduzierte Bild wiederholt wird, dessen Inhalt den vorgegebenen Wert überschreitet und das noch nicht in einer vorausgegangenen Abtastung mit einem Index versehen wurde.

2.	Verfahren nach Anspruch 1,
	**dadurch gekennzeichnet, daß**
	entsprechend dem Ausgangssignal des Fensterkomparators (17) für jeden Bildpunkt des Ausgangsbildes ein Wert in einem Speicherelement einer ersten Speichermatrix (22) mit n·m Speicherelementen gespeichert wird, wobei die Position des jeweiligen Speicherelementes der Position des zugehörigen Bildpunktes im Ausgangsbild entspricht.

3.	Verfahren nach Anspruch i oder 2,
	**dadurch gekennzeichnet, daß**
	eine RGB-Kamera verwendet wird,
	daß für jeden Bildpunkt die Farbkomponenten (R, G, R) des Bildsignals einem Fensterkomparator (17 a-c) und die Ausgangssignale der Fensterkomparatoren einem Multiplizierer (19) zugeführt werden, und daß das Ausgangssignal des Multiplizierers in einem Speicherelement des ersten Speichers (22) abgespeichert wird.

4. Verfahren nach Anspruch 3,
**dadurch gekennzeichnet, daß**
die RGB-Signale der Videokamera einer Farbraumtransformation unterzogen werden, und daß die Komponenten des resultierenden HSI-Signals den Fensterkomparatoren (17 a-c) zugeführt werden.

5. Verfahren nach einem der Ansprüche 1-4,
**dadurch gekennzeichnet, daß**
das Bildsignal digitalisiert und das digitalisierte Signal den Fensterkomparatoren (17a-c) zugeführt wird.

6. Verfahren nach Anspruch 3 oder 5,
**dadurch gekennzeichnet, daß**
die Ausgangssignale der Fensterkomparatoren einem UND-Gatter (19) und das Ausgangssignal des UND-Gatters dem ersten Speicher (22) zugeführt wird.

7. Vorrichtung zum automatischen Erkennen von Objektes, Insbesondere von unregelmäßig und/oder unzusammenhängend geformten Objekten wie beispielsweise Zellclustern, bei der mit Hilfe einer Video-Kamera (3) von dem zu untersuchenden Objektraum ein Ausgangsbild mit n·m Bildpunkten aufgenommen wird,
**gekennzeichnet durch**
einen oder mehrere Fensterkomparatoren (17a, 17b, 17c), in denen die von der Video-Kamera (3) gelieferten Bildpunkt-Signale mit einem oberen und einem unteren Schwellwert verglichen werden,
einen ersten Speicher (22), dessen Speicherplatzzahl dem Format der Video-Kamera entspricht und in dem entsprechend dem Ausgangssignal der Fensterkomparatoren für jeden Bildpunkt des Ausgangsbildes ein Wert gespeichert wird,
einen ersten Addierer, der für Bereiche (a b) des Ausgangsbildes die Zahl der zwischen den Schwellwerten liegenden Bildpunkt-Signale bestimmt,
einen zweiten Speicher (23), der diese Zahl in einem Element einer Speichermatrix für ein reduziertes Bild speichert,
eine Einrichtung zur Aufnahme der Daten einer Abtastmatrix,
einen Microprozessor, der das im zweiten Speicher (23) enthaltene reduzierte Bild mit der Abtastmatrix abtastet,
wobei er das zentrale Element der Abtastmatrix über ein Element des reduzierten Bildes legt, dessen Inhalt einen vorgegebenen Wert SW überschreitet, und der sodann diejenigen Elemente innerhalb der Abtastmatrix, deren Inhalt ebenfalls den vorgegebenen Wert SW übersteigt, ermittelt und als mit dem Ausgangsmatrix-element zusammengehörig feststellt und mit dem gleichen Index I versieht, wobei er diesen Vorgang an jedem Matrxielement des Speichers (23) für das reduzierte Bild wiederholt, dessen Inhalt den vorgegebenen Wert überschreitet und das noch nicht in einer vorausgegangenen Abtastung mit einem Index versehen wurde,
und durch einen der Struktur des zweiten Speichers (23) entsprechenden dritten Speicher (26) zum Aufnehmen der Indices, die von dem Microprozessor beim Abtasten mit der Abtastmatrix den Elementen des zweiten Speichers zugewiesen werden.

8. Vorrichtung nach Anspruch 7,
**gekennzeichnet durch**
einen A/D-Wandler zur Umwandlung der Video-Signale in Digitalsignale, und durch ein UND-Gatter, dem die Ausgangssignale der Fensterkomparatoren zugeführt werden.

9. Vorrichtung zur Durchführung des Verfahrens nach einem der Ansprüche 1 - 6,
**gekennzeichnet durch**
eine Farbbildkamera (3), deren drei Ausgangssignalkomponenten (RGB oder HSI) Fensterkomparatoren (17a, 17b, 17c) zugeführt werden,
einen Pixel-Synchronsignalgenerator (24), dem das Horizontal-Synchronsignal der Farbbildkamera zugeführt wird,
ein UND-Gatter (19), dem die Ausgangssignale der Fensterkomparatoren (17a - 17c) zugeführt werden,
einen ersten Addierer (25), dem die Ausgangssignale des UND-Gatters (19) zugeführt werden und der über eine Länge von a Taktzyklen des Pixelsynchronsignals die digitalen Ausgangssignale des UND Gatters aufsummiert,
einen zweiten Addierer (27), dessen einem Eingang das Summen-Ausgangssignal des Summier-Zählers (25) und dessen anderem Eingang der Inhalt derjenigen Speicherzelle der Speichermatrix (23) für das reduzierte Bild zugeführt wird, deren Adresse den während der a Taktzyklen abgetasteten Bildpunkten der Farbbildkamera entspricht, wobei nach der Summenbildung das Ergebnis in der gleichen Speicherzelle der Speichermatrix (23) abgespeichert wird.

10. Vorrichtung nach Anspruch 9,
**dadurch gekennzeichnet, daß**
der erste Addierer (25) als Summierzähler ausgebildet ist, wobei dessen Synchroneingang mit dem Ausgang des Pixel-Synchronsignalgenerators (24) verbunden ist,

11. Vorrichtung nach einem der Ansprüche 7 bis 10,
**dadurch gekennzeichnet, daß**
die Farbsignale der Video-Kamera jeweils zweiten Fensterkomparatoren (18a. 18b, 18c) zugeführt werden, deren Ausgangsanschlüsse mit einem zweiten UND-Gatter (20) verbunden sind, und daß die Ausgangssignale des ersten UND-Gatters (19) und die des zweiten UND-Gatters (20) in einem ODER-Gatter (21) miteinander verknüpft werden, wobei diese Ausgangssignale des ODER-Gatters (21) dem ersten Addierer dem Zwischenbildspeicher (22) oder dem als Summier-Zähler ausgebildeten ersten Addierer (25) zugeführt werden.

12. Vorrichtung nach einem der Ansprüche 9 - 11,
**dadurch gekennzeichnet, daß**
ein Microprozessor vorgesehen ist, der das Abtasten des reduzierten Bildes mit der Abtastmatrix programmgesteuert vornimmt und die beim Abtasten den Elementen des reduzierten Bildes zugewiesenen Indices in dem dritten Speicher (26) einträgt.

## Claims

1. Process for the automatic recognition of objects, in particular of irregularly and/or discontinuously formed objects such as for example cell clusters, in which an initial image, having n.m image points, is taken of the object region to be investigated by means of a video camera,
characterised by
the following further process steps:
(a) the image point signals provided by the video camera (3) are compared with an upper and a lower threshold value in a window comparator (17; 17a, 17b, 17c);
(b) in correspondence with the output signal of the window comparator, the number of image point elements lying between the threshold values is determined for a region (a.b) of the initial image, and this number is stored in an element of a memory matrix (23) for a reduced image, the position of each individual matrix element in the memory matrix (23) corresponding to the position of the associated region (a.b) in the output image of the video camera (3);
(c) the reduced image held in the memory matrix (23) is scanned with a mask, the central element of the mask being laid over an element of the reduced image the content of which exceeds a predetermined value SW, and then those matrix elements within the mask whose contents also exceed the predetermined value SW are detected and are considered as belonging together with the initial image element and are allocated the same index I, this procedure being repeated for each matrix element of the memory matrix (23) of the reduced image whose content exceeds the predetermined value and which has not yet been allocated an index in a preceding scanning.

2. Process according to claim 1,
characterised in that,
in correspondence to the output signal of the window comparator (17) a value is stored in a memory element of a first memory matrix (22), having n·m memory elements, for each image point of the initial image, the position of the respective memory element corresponding to the position of the associated image point in the initial image.

3. Process according to claim 1 or 2,
characterised in that,
an RGB camera is employed,

in that,

for each image point the colour components (R, G, B) of the image signal are supplied to a window comparator (17 a-c) and the output signals of the window comparators are supplied to a multiplier (19), and in that,

the output signal of the multiplier is stored in a memory element of the first memory (22).

4. Process according to claim 3,
characterised in that,
the RGB signals of the video camera are subjected to a colour space transformation,
and in that,
the components of the resulting HSI signal are supplied to the window comparators (17 a-c).

5. Process according to any of claims 1-4,
characterised in that,
the image signal is digitised and the digitised signal is supplied to the window comparators (17 a-c).

6. Process according to claim 3 or 5,
characterised in that,
the output signals of the window comparators are supplied to an AND gate (19) and the output signal of the AND gate are supplied to the first memory (22).

7. Device for the automatic recognition of objects, in particular of irregularly and/or discontinuously formed objects such as for example cell clusters, in which an initial image, having n·m image points, is taken of the object region to be investigated by means of a video camera (3),
characterised by
one or more window comparators (17a, 17b, 17c) in which the image point signals provided by the video camera (3) are compared with an upper and a lower threshold value;
a first memory (22) whose number of memory locations corresponds to the format of the video camera, and in which, in correspondence with the output signal of the window comparators, there is stored a value for each of the image points of the initial image,
a first adder which determines the number of image point signals lying between the threshold values, for regions (a b) of the output image,
a second memory (23) which stores this number in an element of a memory matrix for a reduced image, means for taking up the data of a scanning matrix,
a microprocessor which scans the reduced image stored in the second memory (23) with the scanning matrix, the central element of the scanning matrix being laid over an element of the reduced image the content of which exceeds a predetermined value SW, and then those matrix elements within the scanning matrix whose contents also exceed the predetermined value SW are detected and are considered as belonging together with the initial matrix element and are allocated the same index I, this procedure being repeated for each matrix element of the memory (23) for the reduced image whose content exceeds the predetermined value and which has not been allocated an index in a preceding scanning,
and by
a third memory (26), corresponding to the structure of the second memory (23), for taking up the indices which are allocated to the elements of the second memory by the microprocessor in the scanning with the scanning matrix.

8. Device according to claim 7,
characterised by
an A/D converter for converting the video signals to digital signals,
and by an AND gate to which the output signals of the window comparators are supplied.

9. Device for carrying out a process according to any of claims 1 to 6,
characterised by
a colour camera (3) whose three output signal components (RGB or HSI) are supplied to window comparators (17a, 17b, 17c),
a pixel synchronisation signal generator (24), to which the horizonal synchronisation signal of the colour camera is supplied,
an AND gate (19), to which the output signals of the window comparators (17a - 17c) are supplied,

15

a first adder (25), to which the output signals of the AND gate (19) are supplied and which sums the digital output signals of the AND gate over a period of a clock cycles of the pixel synchronisation signal,
a second adder (27), to one input of which the summation output signal of the cumulative counter (25) is supplied and to the other input of which there is supplied the content of that memory cell of the memory matrix (23) for the reduced image whose address corresponds to the image points of the colour camera scanned during the a clock cycles, whereby after the formation of the sum the result is stored in the same element of the memory matrix (23).

10. Device according to claim 9,
characterised in that,
the first adder (25) is formed as a cumulative counter the clock input of which is connected to the output of the pixel synchronisation signal generator (24).

11. Device according to any of claims 7 to 10,
characterised in that,
the colour signals of the video camera are each supplied to second window comparators (18a, 18b, 18c) whose output terminals are connected with a second AND gate (20),
and in that,
the output signals of the first AND gate (19) and of the second AND gate (20) are combined with one another in an OR gate (21), these output signals of the OR gate (21) being supplied to the first adder the intermediate image memory (22) or to the first adder formed as a cumulative counter (25).

12. Device according to any of claims 9 - 11,
characterised in that,
a microprocessor is provided which effects the scanning of the reduced image with the scanning matrix under program control and enters in the third memory (26) the indices allocated during the scanning of the elements of the reduced image.


**Revendications**

1. Procédé de reconnaissance automatique d'objets, en particulier d'objets de forme irrégulière et/ou non cohérente, comme par exemple des amas de cellules, dans le cas duquel, à l'aide d'une caméra vidéo, on obtient de l'espace-objet à étudier, une image initiale comportant n·m points d'image,
   caractérisé par les autres pas de procédé suivants:
   a) les signaux relatifs aux points d'image, fournis par la caméra vidéo (3), sont, dans un comparateur à fenêtre (17; 17a, 17ab, 17c), comparés à une valeur de seuil supérieure et à une valeur de seuil inférieure;
   b) en fonction du signal de sortie du comparateur à fenêtre, le système détermine, pour une zone (a·b) de l'image initiale, le nombre des signaux, relatifs aux points d'image, qui sont situés entre les valeurs de seuil, et mémorise ce nombre dans un élément d'une matrice de mémoire (23) pour donner une image réduite, la position de chacun des éléments de la matrice de mémoire (23) correspondant à la position de la zone correspondante (a·b) dans l'image initiale de la caméra vidéo (3);
   c) le système explore avec un masque l'image réduite, contenue dans la matrice de mémoire (23), l'élément central du masque étant placé au-dessus d'un élément de l'image réduite dont le contenu ne dépasse pas une valeur prescrite SW et le système détermine les éléments de la matrice, situés à l'intérieur du masque, dont le contenu dépasse également la valeur prescrite SW et ces éléments sont considérés comme formant un tout allant avec l'élément de la matrice de sortie et sont munis du même indice I, ce processus se répétant, pour donner l'image réduite, sur chaque élément de la matrice de mémoire (23) dont le contenu dépasse la valeur prescrite et qui n'a pas encore été muni d'un indice lors d'une exploration précédente.

2. Procédé selon la revendication 1,
   caractérisé par le fait qu'en fonction du signal de sortie du comparateur à fenêtre (17) pour chaque point d'image de l'image initiale, le système mémorise une valeur dans un élément de mémoire d'une première matrice de mémoire (22) comportant n·m éléments de mémoire, la position de chaque élément de mémoire correspondant à la position du point d'image correspondant dans l'image initiale.

**3.** Procédé selon la revendication 1 ou 2,

caractérisé par le fait que l'on emploie une caméra (R, G, B), décomposant les couleurs en rouge-vert-bleu;

que, pour chaque point d'image, les composantes chromatiques (rouge-vert-bleu) du signal de l'image sont amenées à un comparateur à fenêtre (17a-c) et les signaux de sortie des comparateurs à fenêtre le sont à un multiplicateur (19), et que le système mémorise le signal de sortie du multiplicateur dans un élément de mémoire de la première mémoire (22).

**4.** Procédé selon la revendication 3,

caractérisé par le fait que le système soumet les signaux rouge-vert-bleu de la caméra vidéo à une transformation dans l'espace chromatique et envoie les composantes du signal HSI, tonalité chromatique - saturation chromatique-intensité, résultant aux comparateurs à fenêtre (17a-c).

**5.** Procédé selon l'une des revendications 1-4,

caractérisé par le fait que le système numérise le signal relatif à l'image et envoie le signal, numérisé, aux comparateurs à fenêtre (17a-c).

**6.** Procédé selon la revendication 3 ou 5,

caractérisé par le fait que le système envoie les signaux de sortie des comparateurs à fenêtre à une porte ET (19) et le signal de sortie de la porte ET dans la première mémoire (22).

**7.** Dispositif de reconnaissance automatique d'objets, en particulier d'objets de forme irrégulière et/ou non cohérente, comme par exemple des amas de cellules, dans le cas duquel, à l'aide d'une caméra vidéo, on obtient de l'espace-objet à étudier, une image initiale comportant n·m points d'image,

caractérisé par un ou plusieurs comparateurs à fenêtre (17a, 17b, 17c), dans lesquels les signaux relatifs aux points d'image fournis par la caméra vidéo (3) sont comparés à une valeur de seuil supérieure et à une valeur de seuil inférieure,

par une première mémoire (22), dont le nombre de positions de mémoire correspond au format de la caméra vidéo et dans laquelle le système mémorise une valeur pour chaque point d'image de l'image initiale en fonction du signal de sortie des comparateurs à fenêtre,

par un premier additionneur qui, pour des zones ((a·b) de l'image initiale, détermine le nombre des signaux relatifs aux points d'image situés entre les valeurs de seuil,

par une seconde mémoire (23) qui mémorise ce nombre dans un élément d'une matrice de mémoire pour donner une image réduite,

par un dispositif pour recevoir les données d'une matrice d'exploration,

par un microprocesseur qui, avec la matrice d'exploration, explore l'image réduite contenue dans la seconde mémoire (23), étant précisé qu'il place l'élément central de la matrice d'exploration au-dessus d'un élément de l'image réduite dont le contenu dépasse une valeur prescrite SW, et qu'il détermine alors les éléments, situés à l'intérieur de la matrice d'exploration, dont le contenu dépasse également la valeur prescrite SW et les considère comme formant un tout allant avec l'élément de la matrice de sortie et les munit du même indice I, étant précisé que, pour obtenir l'image réduite, il répète le processus sur chaque élément de la matrice de mémoire (23) dont le contenu dépasse la valeur prescrite et qui n'a pas encore été muni d'un indice lors d'une exploration précédente,

et par une troisième mémoire (26), correspondant à la structure de la seconde mémoire (23), pour recevoir les indices qui sont attribués aux éléments de la seconde mémoire par le microprocesseur lors de l'exploration avec la matrice d'exploration.

**8.** Dispositif selon la revendication 7,

caractérisé par

un convertisseur analogique/numérique pour convertir les signaux vidéo en signaux numériques, et par une porte ET à laquelle sont envoyés les signaux de sortie des comparateurs à fenêtre.

**9.** Dispositif pour la mise en oeuvre du procédé selon l'une des revendications 1-6,

caractérisé par

une caméra (3) pour images en couleur dont les trois composantes du signal de sortie (RGB, rouge-vert-bleu, ou HSI, tonalité chromatique - saturation chromatique-intensité) sont envoyées aux comparateurs à fenêtre (17a, 17b, 17c),

un générateur (24) de signaux de synchronisme des pixels, auquel est envoyé le signal de syn-

17

chronisme horizontal de la caméra pour images en couleur,

et une porte ET (19) à laquelle sont envoyés les signaux de sortie des comparateurs à fenêtre (17a-17c),

un premier additionneur (25) auquel sont envoyés des signaux de sortie de la porte ET (19) et qui, sur une longueur de a cycles du signal de synchronisme des pixels, somme par intégration les signaux de sortie numériques de la porte ET,

un second additionneur (27) à une première entrée duquel est envoyé le signal de sortie de sommation du comparateur de sommation (25) et à l'autre entrée duquel est envoyé, pour donner l'image réduite, le contenu des cellules de mémoire de la matrice de mémoire (23) dont l'adresse correspond aux points d'image de la caméra pour images en couleur explorés pendant les a cycles du signal de synchronisme, étant précisé qu'après la formation de la somme, le résultat est mémorisé dans la même cellule de mémoire de la matrice de mémoire (23).

10. Dispositif selon la revendication 9, caractérisé par le fait que le premier additionneur (25) est conçu en tant que compteur de sommation, son entrée de synchronisme étant reliée à la sortie du générateur (24) du signal de synchronisme des pixels.

11. Dispositif selon l'une des revendications 7 à 10,

caractérisé par le fait que les signaux chromatiques de la caméra vidéo sont chaque fois envoyés à deux comparateurs à fenêtre (18a, 18b, 18c) dont les bornes de sortie sont reliées à une seconde porte ET (20) et que les signaux de sortie de la première porte ET (19) et ceux de la seconde porte ET ( 20) sont logiquement reliés l'un à l'autre dans une porte OU (21), ces signaux de sortie de la porte (OU) (21) étant envoyés au premier additionneur de la mémoire d'image intermédiaire (22) ou au premier additionneur (25) conçu en tant que compteur de sommation.

12. Dispositif selon l'une des revendication 9 - 11,

caractérisé par le fait qu'est prévu un microprocesseur qui, commandé par un propramme, procède à l'exploration de l'image réduite avec la matrice d'exploration et entre introduit dans la troisième mémoire (26) les indices attribués, lors de l'exploration, aux éléments de l'image réduite.

Figur 1

Rot     Gruen     Blau

Rasterbilder

Szene

0  5
11  8 7
6
3

Figur 2    Abbildung von Objekten auf ein Raster

Nicht erkannt
( Flaeche zu klein )

Erkannt
( Flaeche ausreichend )

Nicht erkannt
( Flaeche zu klein )

Erkannt
( Flaeche ausreichend )

Figur 3     Fenster-
            Komparatoren

Rot     (H)                    17a

Gruen   (S)                    17b                    19          22

                                                      &

Blau    (I)                    17c                         U₃(t)

        U₁(t)                        U₂(t)

Analog-Signale          Digital-Signale          Digital-Signal

$U_1(t)$                 $U_2(t)$                 $U_3(t)$

        t                       t                        t

Figur 4    Signalweg bei Auswahl disjunkter
           Farbbereiche ( exemplarisch )

Figur 5

R$_{ij}$

23

22

26

Reduktionsabbildung

Figur 6

RGB Sync — 3

17a
17b
17c

& — 19

IN Sync — 25

Data

Addierer — 27

Data IN

Takt

24

Data Out

Speichermatrix für reduziertes Bild $R_{ij}$ — 23

IN Zähler — 28

Data

Spalten Adressierung — 30

IN Zähler — 29

Data

Zeilen Adressierung — 31

## Figur 7a Datenflußplan für den Programmteil 'search'

```
                        ┌──────────────────┐
                        │      Begin        │
                        └──────────────────┘
                        ┌──────────────────┐
                        │  i := 0, j:= 0    │
                        │  No := 0          │
                        └──────────────────┘
        False                  if j < ywidth              True

                                    True        if i < xwidth        False

    ┌──────┐    False      if N[i][ j] <> 0        True
    │ End  │                                                      ┌─────────────────┐
    └──────┘                                                      │  i := 0, j:= j+1 │
                                                                  └─────────────────┘
    False      if R[i][ j] <= SW            True

                                                        ┌──────────┐
                                                        │ i := i+1 │
                                                        └──────────┘
        ┌────────────────────────┐
        │ No := No + 1            │
        │ ResList[No] :=          │
        │ ResList[No] + R[i][ j]  │
        │ N[i][ j] := No          │
        └────────────────────────┘
        ┌────────────────────────┐
        │ check Unterprogramm     │
        │ Parameter i , j, No     │
        │ Rückgabewert "CHECK"    │
        └────────────────────────┘
        ┌────────────────────────┐
        │ ResList[no] :=          │
        │ ResList[No] + CHECK     │
        └────────────────────────┘
```

Figur 7b Struktogramm für Programm "search'

| 1. No := 0, j:= 0, i := 0 | | |
|---|---|---|
| 2. solange j < ywidth | | |
| 3. solange i < xwidth | | |
| n      4. N[i][ j] <> 0    j | | |
| n      5. R[i][ j] <= SW   j | | |
| 6. No := No + 1 | ./. | ./. |
| 7. ResList[No] := ResList[No] + R[i][ j] | | |
| 8. N[i][ j] := No | | |
| 9. Unterprogramm check(i,j,No) Rückgabe des Wertes "check" | | |
| 10. ResList[No] := ResList[No]+check | | |
| 11. i := i + 1 | | |
| 12. j := j + 1 | | |

26

# Figur 8a Datenflußplan für den Programmteil 'check'

```
                        ┌─────────────────────────┐
                        │      Begin (i, j, No)    │
                        └─────────────────────────┘
                                    │
                        ┌─────────────────────────┐
                        │  Parameterübernahme      │
                        │  plsum := 0 , v := j -1, │
                        │            u := i - 1    │
                        └─────────────────────────┘
                                    │
     False                         ◇ if v <= j + 1        True
                                    │
   ┌───────┐                           True   ◇ if u <= i + 1   False
   │  End  │                                    │                    ┌──────────────────┐
   └───────┘       False  ◇ if N[u][v] <> 0   True                  │  u := 0, v:=v+1  │
                                                                     └──────────────────┘
 False     ◇ if R[u][v] <= SW      True
                                              ┌──────────────┐
                                              │   u := u+1   │
                                              └──────────────┘

              ┌────────────────────────────┐
              │  plsum := plsum+R[u][v]     │
              │  N[u][v] := No              │
              └────────────────────────────┘
              ┌────────────────────────────┐
              │  check Unterprogramm        │
              │  Parameter i := u           │
              │  v := j, No := No           │
              │  Rückgabewert "CHECK"       │
              └────────────────────────────┘
              ┌────────────────────────────┐
              │  plsum := plsum+CHECK       │
              └────────────────────────────┘
```

Figur 8b Struktogramm für Programm 'check'

| 1. Parameterübergabe aus aufrufendem Programm : i,j, No | | |
|---|---|---|
| 2. plsum := 0   v:= j - 1   u := i - 1 | | |
| 3. solange v <= j + 1 | | |
| 4. solange u <= i + 1 | | |
| n          5. N[u][v] <>0          j | | |
| n          6. r[u][v] <= SW       j | ./. | ./. |
| 7. plsum := plsum + R[u][v] | | |
| 8. N[u][v] = No | | |
| 9. Unterprogramm Variablen i := u, j:= v, No := No Unterprogramm check(i,j,No) Rückgabe des Wertes "check" | | |
| 10. plsum := plsum + check | | |
| 11. u := u + 1 | | |
| 12. v := v + 1 | | |

Fig. 9    Reduziertes Bild

Datenebene R[i][j]

Datenebene N[i][j]

Fig. 10    Reduziertes Bild

Datenebene R[i][j]

Datenebene N[i][j]

Fig. 11    Reduziertes Bild

Datenebene R[i][j]

Datenebene N[i][j]

Fig. 12    Reduziertes Bild

Datenebene R[i][j]

Datenebene N[i][j]

Fig. 13     Reduziertes Bild

Datenebene R[i][j]

Datenebene N[i][j]

Fig. 14     Reduziertes Bild

Datenebene R[i][j]

Datenebene N[i][j]

Fig. 15     Reduziertes Bild

Datenebene R[i][j]

0 1 2 3 4 5 6 7 8

Datenebene N[i][j]

0 1 2 3 4 5 6 7 8

Fig. 16     Reduziertes Bild

Datenebene R[i][j]

0 1 2 3 4 5 6 7 8

Datenebene N[i][j]

0 1 2 3 4 5 6 7 8

Fig. 17    Reduziertes Bild

Datenebene R[i][j]

Datenebene N[i][j]

Fig. 18    Reduziertes Bild

Datenebene R[i][j]

Datenebene N[i][j]

Figur 19